(19) Europäisches Patentamt
European Patent Office
Office européen des brevets

(11) **EP 3 019 010 B1**

(12) **EUROPÄISCHE PATENTSCHRIFT**

(45) Veröffentlichungstag und Bekanntmachung des Hinweises auf die Patenterteilung:
**20.06.2018 Patentblatt 2018/25**

(21) Anmeldenummer: **14735982.2**

(22) Anmeldetag: **08.07.2014**

(51) Int Cl.:
*A01N 37/02* (2006.01)    *A01N 47/36* (2006.01)
*A01N 47/38* (2006.01)    *A01P 13/00* (2006.01)

(86) Internationale Anmeldenummer:
**PCT/EP2014/064503**

(87) Internationale Veröffentlichungsnummer:
**WO 2015/004086 (15.01.2015 Gazette 2015/02)**

(54) **HERBIZID-KOMBINATION MIT PELARGONSÄURE UND BESTIMMTEN ALS-INHIBITOREN**

HERBICIDE COMBINATION COMPRISING PELARGONIC ACID AND ALS-INHIBITORS

COMBINAISON HERBICIDE COMPRENANT L'ACIDE PÉLAGONIQUE ET DES INHIBITEURS DE L'ALS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **12.07.2013 EP 13176240**

(43) Veröffentlichungstag der Anmeldung:
**18.05.2016 Patentblatt 2016/20**

(60) Teilanmeldung:
**17179957.0 / 3 245 873**

(73) Patentinhaber: **Bayer CropScience Aktiengesellschaft**
**40789 Monheim am Rhein (DE)**

(72) Erfinder:
• **KILIAN, Michael**
**51379 Leverkusen (DE)**
• **MARIENHAGEN, Christian**
**40764 Langenfeld (DE)**

(74) Vertreter: **BIP Patents**
**c/o Bayer Intellectual Property GmbH**
**Alfred-Nobel-Straße 10**
**40789 Monheim am Rhein (DE)**

(56) Entgegenhaltungen:
**EP-A1- 0 494 386     WO-A1-2008/142391**
**US-A- 5 106 410     US-B1- 6 503 869**

**Beschreibung**

Die vorliegende Erfindung liegt auf dem technischen Gebiet der Pflanzenschutzmittel, die gegen unerwünschten Pflanzenwuchs, beispielsweise im Nachauflauf in gesäten und/oder gepflanzten Kulturpflanzen, in Obstanbauanlagen (Plantagenkulturen), auf Nicht-Kulturflächen (z.B. Plätzen von Wohn- und Industrieanlagen, Gleisanlagen) und auf Rasenflächen eingesetzt werden können. Neben der einmaligen Anwendung sind auch Sequenz-Anwendungen möglich.

Die vorliegende Erfindung betrifft eine Herbizid-Kombination, enthaltend mindestens zwei Herbizide und deren Anwendung zur Bekämpfung unerwünschten Pflanzenwuchses, insbesondere eine Herbizid-Kombination enthaltend mindestens Pelargonsäure und mindestens einen ALS-Inhibitor ausgewählt aus der Gruppe von Iodosulfuron-methyl, Foramsulfuron, Mesosulfuron-methyl, Amidosulfuron, Ethoxysulfuron und Thiencarbazone-methyl.

Herbizid-wirksame Fettsäuren sind aus dem Stand der Technik bekannt (z.B. WO91/05472).

Eine Verbindung aus der Substanzklasse der ALS-Inhibitoren hemmt das Enyzm Acetolactatsynthase (ALS) welches für die Biosynthese von verzweigten Aminosäuren wie L-Valin, L-Leucin und L-Isoleucin verantwortlich ist. Deshalb wird diese Substanzklasse - neben anderen Substanzklassen - entsprechend ihrem Wirkmechanismus der Gruppe der ALS (Acetolactat-Synthase) Inhibitoren zugeordnet (siehe dazu auch http://www.hracglobal.com/Portals/5/moaposter.pdf). Zu den ALS-Inhibitoren gehören beispielsweise die Sulfonylharnstoffe (z.B. siehe auch "The Pesticide Manual" 15th, Edition, British Crop Protection Council 2011). Diese Herbizide werden insbesondere auf Ackerflächen für Soja und Getreide häufig angewandt. Die Aufnahme dieser Herbizide erfolgt über die Wurzeln und Blätter.

Die herbizide Wirksamkeit von solchen Herbiziden gegen Schadpflanzen (Unkräuter, Ungräser, Cyperaceen; im Folgenden auch zusammenfassend als "Unkraut" bezeichnet) liegt bereits auf einem hohen Niveau, hängt jedoch im Allgemeinen von der Aufwandmenge, der jeweiligen Zubereitungsform, den jeweils zu bekämpfenden Schadpflanzen oder dem Schadpflanzenspektrum, den Klima- und Bodenverhältnissen, etc. ab. Weitere Kriterien in diesem Zusammenhang sind die Dauer der Wirkung bzw. die Abbaugeschwindigkeit des Herbizids, die allgemeine Kulturpflanzenverträglichkeit und Wirkungsgeschwindigkeit (schnellere Wirksamkeit), das Wirkungsspektrum und Verhalten gegenüber Folgekulturen (Nachbauprobleme) oder die allgemeine Anwendungsflexibilität (Bekämpfung von Unkräutern in ihren verschiedenen Wachstumsstadien). Zu berücksichtigen sind gegebenenfalls auch Veränderungen in der Empfindlichkeit von Schadpflanzen, die bei längerer Anwendung der Herbizide oder geographisch begrenzt auftreten können (Bekämpfung toleranter oder resistenter Unkrautarten). Wirkungsverluste bei einzelnen Pflanzen lassen sich nur bedingt durch höhere Aufwandmengen der Herbizide ausgleichen, z.B. weil damit die Selektivität der Herbizide reduziert wird oder eine Wirkungsverbesserung auch bei höherer Aufwandmenge nicht eintritt.

So besteht oft Bedarf an gezielt synergistischer Aktivität gegenüber speziellen Unkrautarten, einer Unkrautbekämpfung mit insgesamt besserer Selektivität, einem allgemein geringeren Wirkstoffeinsatz für einen gleich guten Bekämpfungserfolg und für einen geringeren Wirkstoffeintrag in die Umwelt, um beispielsweise "Leaching"- und "Carryover"-Effekte zu vermeiden. Ebenso besteht auch Bedarf an der Entwicklung von "One shot"-Applikationen, um arbeitsaufwändige Mehrfachapplikationen zu vermeiden, ebenso wie an der Entwicklung von Systemen zur Steuerung der Wirkungsgeschwindigkeit, wobei neben einer ersten, schnellen Unkrautkontrolle auch eine langsame, residual wirkende Bekämpfung eingestellt wird.

Eine mögliche Lösung für die oben genannten Probleme kann in der Bereitstellung von Herbizid-Kombinationen liegen, also der Mischung mehrerer Herbizide und/oder weiterer Komponenten aus der Gruppe agrochemischer Wirkstoffe anderer Art sowie im Pflanzenschutz üblicher Zusatzstoffe und Formulierungshilfsmitteln, welche die gewünschten zusätzlichen Eigenschaften beisteuern. Allerdings treten bei der kombinierten Anwendung mehrerer Wirkstoffe nicht selten Phänomene der chemischen, physikalischen oder biologischen Unverträglichkeit auf, z.B. mangelnde Stabilität in einer gemeinsamen Formulierung, Zersetzung eines Wirkstoffes bzw. Antagonismus in der biologischen Wirksamkeit der Wirkstoffe. Daher müssen potentiell geeignete Kombinationen gezielt ausgewählt und experimentell auf ihre Eignung hin überprüft werden, wobei negative wie positive Ergebnisse im Vorhinein nicht sicher ausgeschlossen werden können.

EP0494386A1 beschreibt die Kombination einer $C_7$-$C_{20}$-Fettsäure mit einem Herbizid. Als Herbizidwirkstoffe werden eine Reihe an möglichen Kandidaten u.a. auch Sulfonylharnstoffe wie Chlorimuron und Bensulfuron genannt (Siehe S. 3).

US6'503'869B1 bezieht sich auf die Verbesserung herbizider Zusammensetzungen durch Zugabe vom Ammoniumsalz einer $C_7$-$C_{11}$-Fettsäure.

Die Aufgabe der vorliegenden Erfindung bestand darin, dem Stand der Technik gegenüber alternative oder verbesserte Pflanzenschutzmittel zur Verfügung zu stellen.

Überraschenderweise wurde nun gefunden, dass diese Aufgabe durch die Kombination von Pelargonsäure und mindestens einem ALS-Inhibitor ausgewählt aus der Gruppe von Iodosulfuron-methyl, Foramsulfuron, Mesosulfuronmethyl, Amidosulfuron, Ethoxysulfuron und Thiencarbazone-methyl gelöst werden kann, die in besonders günstiger Weise zusammenwirken; z.B. wenn sie zur Bekämpfung von unerwünschtem Pflanzenwuchs in gesäten und/oder gepflanzten Kulturpflanzen, Grün/Rasenflächen, in Obstanbauanlagen (Plantagenkulturen) oder auf Nicht-Kulturflächen (z.B. Plätzen von Wohn- und Industrieanlagen, Gleisanlagen eingesetzt werden. Überraschenderweise ist die Wirksamkeit der erfindungsgemäßen Kombinationen aus zwei Wirkstoffen beim Einsatz gegen Unkräuter höher als die Wirkungen der einzelnen Komponenten. Es liegt also ein nicht vorhersehbarer, echter synergistischer Effekt vor und nicht nur eine Wirkungsergänzung (additiver Effekt).

Die Pelargonsäure (Nonansäure) ist eine gesättigte Fett- bzw. Carbonsäure, die sich vom Alkan n-Nonan ableitet. Sie ist eine bei Standardbedingungen flüssige Alkansäure die herbizid wirksam ist. Vorzugsweise wird Pelargonsäure erfindungsgemäß unverseift eingesetzt.

Erfindungsgemäß eingesetzte ALS-Inhibitoren sind ausgewählt aus der Gruppe von Iodosulfuron-methyl (IUPAC Name: 4-Iodo-2-[(4-methoxy-6-methyl-1,3,5-triazin-2-yl)carbamoylsulfamoyl]benzoate, Natriumsalz), Foramsulfuron (IUPAC Name: 1-(4,6-Dimethoxypyrimidin-2yl)-3-(2-dimethylcarbamoyl-5-formamidophenylsulfonyl)harnstoff, Mesosulfuron-methyl (IUPAC Name: Methyl 2-[(4,6-dimethoxypyrimidin-2-ylcarbamoyl)sulfamoyl]-a-(methanesulfonamido)-p-toluate), Amidosulfuron (IUPAC: 3-(4,6-Dimethoxypyrimidin-2-yl)-1-(N-methyl-N-methylsulfonyl-aminosulfonyl)harnstoff, Ethoxysulfuron (IUPAC Name: 2-ethoxyphenyl[(4,6-dimethoxypyrimidin-2-yl)carbamoyl]sulfamate) und Thiencarbazone-methyl (IUPAC Name: Methyl -4-[(4,5-dihydro-3-mehoxy-4-methyl-5-oxo-1$H$-1,2,4-triazol-1 yl)carbonylsulfamoyl]-5-methylthiophene-3-carboxylate).

Besonders bevorzugt ist die Verwendung von Iodosulfuron-methyl (insbesondere das Natriumsalz) und/oder Foramsulfuron und insbesondere die Verwendung von Iodosulfuron-methyl (insbesondere das Natriumsalz) und Foramsulfuron zusammen. Die Erfindung umfasst auch Kombinationen von ALS-Inhibitoren und insbesondere von zwei oder mehr Sulfonylharnstoffen, die sich vom Wirkungsspektrum ergänzen.

Im Folgenden werden für den Begriff "Komponente(n)" auch die Bezeichnungen "Herbizid(e)", "Einzelherbizid(e)", "Verbindung(en)" oder "Wirkstoff(e)" synonym im Kontext verwendet.

Die erfindungsgemäße Herbizid-Kombination kann zusätzliche weitere Komponenten enthalten: z.B. agrochemische Wirkstoffe anderer Art und/oder im Pflanzenschutz übliche Zusatzstoffe und/oder Formulierungshilfsmittel, oder zusammen mit diesen eingesetzt werden. Im Folgenden umfasst die Verwendung des Begriffs "Herbizid-Kombination(en)" bzw. "Kombination(en)" auch die so entstandenen "herbiziden Mittel".

In bevorzugter Ausführungsform enthält die erfindungsgemäße Herbizid-Kombination mindestens Pelargonsäure und mindestens einen der oben genannten ALS-Inhibitor in einem wirksamen Gehalt und/oder weist synergistische Wirkungen auf. Die synergistischen Wirkungen können z.B. bei gemeinsamer Ausbringung beispielsweise als Readyto-Use Formulierung, Co-Formulierung oder als Tankmischung beobachtet werden, sie können jedoch auch bei zeitlich versetzter Anwendung (Splitapplikation, Splitting) festgestellt werden (abgepackt z.B. als Kombipack oder Monodosen). Möglich ist auch die Anwendung der Herbizide oder der Herbizid-Kombination in mehreren Portionen (Sequenzanwendung), z.B. nach Anwendungen im Nachauflauf oder nach frühen Nachauflaufanwendungen, gefolgt von Applikationen im mittleren oder späten Nachauflauf. Bevorzugt ist dabei die gemeinsame Anwendung der erfindungsgemäßen Herbizid-Kombination. Substanzen, die Protonen anziehen (u.a. Fettsäuren) destabilisieren Sulfonylharnstoffe. Dieses bedeutet, dass Sulfonylharnstoffe und Fettsäuren zusammen nicht oder nur sehr schwer als Soloformulierung zu formulieren sind, was gewisse Anforderungen an die Verpackung des Pflanzenschutzmittels stellt. Sollten Fettsäure und Sulfonylharnstoff wie in den Versuchen als Tankmischung ausgebracht werden, ist sicherzustellen, dass die Spritzbrühe relativ rasch nach dem Ansetzen ausgebracht wird.

Die synergistischen Effekte erlauben eine Reduktion der Aufwandmengen der Einzelherbizide, eine höhere und/oder längere Wirkungsstärke bei gleicher Aufwandmenge, die Kontrolle bislang nicht erfasster Arten (Lücken), die Kontrolle von Arten, die Toleranzen oder Resistenzen gegenüber einzelnen oder mehreren Herbiziden aufweisen, eine Ausdehnung des Anwendungszeitraums und/oder eine Reduzierung der Anzahl notwendiger Einzelanwendungen und - als Resultat für den Anwender - ökonomisch und ökologisch vorteilhaftere Unkrautbekämpfungssysteme.

Die Aufwandmenge der Pelargonsäure kann bei der erfindungsgemäßen Herbizid-Kombination in einem weiten Bereich variieren, beispielsweise soll die Aufwandmenge mindestens 2500 g AS/ha (AS/ha bedeutet dabei im Folgenden "Aktivsubstanz pro Hektar" = bezogen auf 100%igen Wirkstoff) betragen, vorzugsweise jedoch zwischen 2500 und 30000 g AS/ha, noch bevorzugter zwischen 10000 und 30000g AS/ha und am bevorzugtesten zwischen 20000 - 30000 g AS/ha.

Die Aufwandmenge des herbizid-wirksamen oben genannten ALS-Inhibitors kann bei der erfindungsgemäßen Herbizid-Kombination in einem weiten Bereich variieren, beispielsweise zwischen 1 g und 200 g AS/ha, wobei ein relativ breites Spektrum an Schadpflanzen bekämpft wird.

Bei der Verwendung von Foramsulfuron liegt die Aufwandmenge vorzugsweise in einem Bereich von 15 - 60 g AS/ha und noch bevorzugter zwischen 30 - 60 und besonders bevorzugt zwischen 30 - 45 g AS/ha.

Bei der Verwendung von Iodosulfuron-methyl liegt die Aufwandmenge vorzugsweise in einem Bereich von 1 und 10 g AS/ha und noch bevorzugter zwischen 1 - 5 g AS/ha.

Bei der Verwendung von Mesosulfuron-methyl liegt die Aufwandmenge vorzugsweise in einem Bereich von 7,5 und 30 g AS/ha.

Bei der Verwendung von Thiencarbazone-methyl liegt die Aufwandmenge vorzugsweise in einem Bereich von 10 und 30 g AS/ha.

Bei der Verwendung von Amidosulfuron liegt die Aufwandmenge vorzugsweise in einem Bereich von 30 und 60 g AS/ha.

Bei der Verwendung von Ethoxysulfuron liegt die Aufwandmenge vorzugsweise in einem Bereich von 60 und 200g AS/ha.

Bereiche für geeignete Mengenverhältnisse der Pelargonsäure und des herbizid-wirksamen ALS-Inhibitors ergeben sich z.B. aus den genannten Aufwandmengen für die Einzelstoffe. In der erfindungsgemäßen Kombination können die Aufwandmengen in der Regel reduziert werden. Bevorzugte Mischungsverhältnisse der Pelargonsäure (im Folgenden als Komponente "A" oder nur als "A" bezeichnet) und oben genannter herbizid-wirksamer ALS-Inhibitor (im Folgenden als Komponente "B" oder nur als "B" bezeichnet) in der erfindungsgemäße Kombination sind durch folgende Gewichtsverhältnisse charakterisiert:

Das Gewichtsverhältnis (A) : (B) der Komponenten (A) und (B) liegt im Allgemeinen im Bereich von 30000 : 1 bis 12,5:1, vorzugsweise 30000: 1 bis 50:1.

Folgende Gewichtsverhältnisse gelten für die bevorzugten Kombinationen von Pelargonsäure plus ALS-Inhibitor.

Bei der Verwendung von Pelargonsäure und Foramsulfuron liegt das Gewichtsverhältnis vorzugsweise im Bereich von 2000:1 bis 167:1 und noch bevorzugter im Bereich von 1000:1 bis 333:1 und besonders bevorzugt im Bereich von 1000:1 bis 444:1.

Bei der Verwendung von Pelargonsäure und Iodosulfuron-methyl liegt das Gewichtsverhältnis vorzugsweise in einem Bereich von 30000:1 bis 1000:1 und noch bevorzugter im Bereich von 30000:1 bis 4000:1.

Bei der Verwendung von Pelargonsäure und Mesosulfuron-methyl liegt das Gewichtsverhältnis vorzugsweise in einem Bereich von 4000:1 bis 333:1.

Bei der Verwendung von Pelargonsäure und Thiencarbazone-methyl liegt das Gewichtsverhältnis vorzugsweise in einem Bereich von 3000:1 bis 333:1.

Bei der Verwendung von Pelargonsäure und Amidosulfuron liegt das Gewichtsverhältnis vorzugsweise in einem Bereich von 1000:1 bis 167:1.

Bei der Verwendung von Pelargonsäure und Ethoxysulfuron liegt das Gewichtsverhältnis vorzugsweise in einem Bereich von 500:1 bis 50:1.

Bevorzugt sind Herbizid-Kombinationen, die neben der erfindungsgemäßen Kombination, auch noch ein oder mehrere weitere agrochemische Wirkstoffe, die ebenfalls die Funktion eines selektiven Herbizides aufweisen, enthalten. Besonders bevorzugt ist die Verwendung der Kombination von Pelargonsäure sowie von mindestens zwei der oben genannten ALS-Inhibitoren vorzugsweise von Foramsulfuron und Iodosulfuron-methyl gleichzeitig.

Bei der besonders bevorzugten Kombination von Pelargonsäure mit Foramsulfuron und Iodosulfuron-methyl (insbesondere das Natriumsalz) entfallen auf 1 (einen) Gewichtsteil an Iodosulfuron-methyl 15-60 Gewichtsteile vom Wirkstoff Foramsulfuron und 2500 - 30000 (bevorzugt 10000 - 30000, besonders bevorzugt 10000-15000) Gewichtsteile von der Pelargonsäure. Überraschenderweise hat sich auch insbesondere gezeigt, dass bereits geringe Mengen der Pelargonsäure (10000g-15000g AS/ha) zusammen mit Foramsulfuron und Iodosulfuron-methyl synergistische Effekte bewirken.

Weiterhin kann die erfindungsgemäße Herbizid-Kombination als zusätzliche weitere Komponenten verschiedene agrochemische Wirkstoffe beispielsweise aus der Gruppe der Safener, Fungizide, Insektizide, Akarizide, Nematizide, Schutzstoffen gegen Vogelfraß, Bodenstrukturverbesserungsmitteln, Pflanzennährstoffen (Düngemitteln) und sich strukturell von den erfindungsgemäß eingesetzten herbizid-wirksamen Verbindungen unterscheidenden Herbizide und Pflanzenwachstumsregulatoren oder aus der Gruppe der im Pflanzenschutz üblichen Zusatzstoffe und Formulierungshilfsmittel enthalten.

Die erfindungsgemäßen Wirkstoffkombinationen besitzen sehr gute herbizide Eigenschaften und lassen sich zur Bekämpfung von Unkräutern verwenden. Unter Unkräutern sind hierbei alle Pflanzen zu verstehen, die an Orten wachsen, wo sie unerwünscht sind.

Die erfindungsgemäßen Wirkstoffkombinationen können z.B. bei den folgenden Pflanzen verwendet werden:

- Dikotyle Unkräuter der Gattungen: Cassia, Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea, Trifolium, Ranunculus, Sphenoclea, Taraxacum, Plantago, Epilobium, Rubus, Achillea, Rumex, Lotus, Bellis.

- Monokotyle Unkräuter der Gattungen: Echinochloa, Eriochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristylis, Sagittaria, Eleocharis, Scirpus, Paspalum, Ischaemum, Dactyloctenium, Agrostis, Alopecurus, Apera, Aegilops, Phalaris.

- <u>Moose und Algen</u>

Bei Applikation der Wirkstoffe auf die grünen Pflanzenteile im Nachauflaufverfahren tritt ebenfalls sehr rasch nach der Behandlung ein drastischer Wachstumsstop ein und die Unkrautpflanzen bleiben in dem zum Applikationszeitpunkt vorhandenen Wachstumsstadium stehen oder sterben nach einer gewissen Zeit ganz ab, so dass auf diese Weise ein Unkrautbefall sehr früh und nachhaltig beseitigt wird.

Bevorzugt lassen sich die erfindungsgemäßen Wirkstoffkombinationen als Totalherbizide zur Bekämpfung von Unkräutern einsetzen, z.B. insbesondere auf Nicht-Kulturflächen wie Wegen, Plätzen sowie unter Bäumen und Sträuchern, Gleisanlagen usw. Die erfindungsgemäßen Wirkstoffkombinationen zeichnen sich durch eine besonders schnell einsetzende und lange anhaltende Wirkung aus.

Die erfindungsgemäße Herbizid-Kombination kann nach bekannten Verfahren z.B. als Mischformulierungen der Einzelkomponenten, gegebenenfalls mit weiteren Wirkstoffen, Zusatzstoffen und/oder üblichen Formulierungshilfsmitteln hergestellt werden, die dann in üblicher Weise mit Wasser verdünnt zur Verwendung gebracht werden, oder als sogenannte Tankmischungen durch gemeinsame Verdünnung der getrennt formulierten oder partiell getrennt formulierten Komponenten mit Wasser hergestellt werden. Ebenfalls möglich ist die zeitlich versetzte Verwendung (Splitapplikation, Splitting) der getrennt formulierten oder partiell getrennt formulierten Einzelkomponenten. Möglich ist auch die Verwendung der Herbizide oder der Herbizid-Kombination in mehreren Portionen (Sequenzanwendung), z.B. im Nachauflauf oder nach frühen Nachauflaufanwendungen, gefolgt von Applikationen im mittleren oder späten Nachauflauf. Bevorzugt ist dabei die gemeinsame Verwendung der Wirkstoffe der jeweiligen Kombination.

Substanzen, die Protonen anziehen (u.a. Fettsäuren) destabilisieren Sulfonylharnstoffe. Dieses bedeutet, dass Sulfonylharnstoffe und Fettsäuren zusammen nicht oder nur sehr schwer als Soloformulierung zu formulieren sind, was gewisse Anforderungen an die Verpackung des Pflanzenschutzmittels stellt. Sollten Fettsäure und Sulfonylharnstoff wie in den Versuchen als Tankmischung ausgebracht werden, ist sicherzustellen, dass die Spritzbrühe relativ rasch nach dem Ansetzen ausgebracht wird. Eine bevorzugte Variante der Erfindung bezieht sich auf Verfahren zu Bekämpfung von Unkräutern, wobei man die Komponente (A) und die Komponente (B) der erfindungsgemäßen Herbizid-Kombination erst kurz vor Ausbringung auf die Unkräuter und/oder deren Lebensraum zusammenmischt. "Kurz vor Ausbringung" bedeutet dabei erfindungsgemäß, dass Komponente (A) und Komponente (B) vorzugsweise weniger als 6 Stunden, bevorzugter weniger als 3 Stunden und noch bevorzugter weniger als 1 Stunde vor Ausbringung auf die Unkräuter und/oder deren Lebensraum zusammengemischt werden.

Ansonsten können die Pelargonsäure und der mindestens eine erfindungsgemäß eingesetzte ALS-Inhibitor gemeinsam oder getrennt in übliche Formulierungen übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen. Die Formulierungen können die üblichen Hilfs- und Zusatzstoffe enthalten.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel könne z.B. auch organische Lösungsmittel als Hilfslösungsmittel verwendet werden. Als flüssige Lösungsmittel kommen im Wesentlichen infrage: Aromaten, wie Xylol, Toluol, Alkylnaphthaline, chlorierte Aromaten oder chlorierte aliphatische Kohlenwasserstoffe, wie Chlorbenzole, Chlorethylene, oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone, wie Aceton, Methylethylketon, Methylisobutylketon oder Cyclohexanon, stark polare Lösungsmittel, wie Dimethylformamid oder Dimethylsulfoxid, sowie Wasser.

Als feste Trägerstoffe kommen in Frage: z.B. Ammoniumsalze und natürliche Gesteinsmehle, wie Kaoline, Tonerden, Talkum, Kreide, Quarz, Attapulgit, Montmorillionit oder Diatomeenerde und synthetische Gesteinsmehle, wie hochdisperse Kieselsäure, Aluminiumoxid und Silikate; als feste Trägerstoffe für Granulate kommen infrage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnuß-Schalen, Maiskolben und Tabakstengel; als Emulgier- und/oder schaumerzeugende Mittel kommen infrage: z.B. nicht ionogene und anionische Emulgatoren, wie Polyoxyethylen-Fettsäureester, Polyoxyethylen-Fettalkohol-Ether, z.B. Alkylarylpolyglykolether, Alkylsulfonate, Alkylsulfate, Arylsulfonate sowie Eiweißhydrolysate; als Dispergiermittel kommen infrage: z.B. Ligninsulfitablaugen und Methylcellulose.

Es können in den Formulierungen Haftmittel wie Carboxymethylcellulose, natürliche und synthetische, pulverige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im Allgemeinen zwischen 0,1 und 95 Gewichtsprozent (Gew.-%) Wirkstoff, vorzugsweise zwischen 0,2 und 90 Gew.-%.

Die erfindungsgemäße Herbizid-Kombination kann als solche, in Form ihrer Formulierungen oder den daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht in üblicher Weise, z.B. durch Gießen, Spritzen, Sprühen, Streuen.

Die erfindungsgemäßen Wirkstoffkombinationen werden im Allgemeinen in Form von Fertigformulierungen zur Anwendung gebracht. Die in den Wirkstoffkombinationen enthaltenen Wirkstoffe können aber auch als Einzelformulierungen bei der Anwendung gemischt, d.h. in Form von Tankmischungen zur Anwendung gebracht werden.

Die gute herbizide Wirkung der neuen Wirkstoffkombinationen geht aus den nachfolgenden Beispielen hervor. Während die einzelnen Wirkstoffe in der herbiziden Wirkung Schwächen aufweisen, zeigen die Kombinationen durchweg eine sehr gute Unkrautwirkung, die über eine einfache Wirkungssummierung hinausgeht.

Ein synergistischer Effekt liegt bei Herbiziden immer dann vor, wenn die herbizide Wirkung der Wirkstoffkombination größer ist als die der einzelnen applizierten Wirkstoffe.

Die zu erwartende Wirkung für eine gegebene Kombination von zwei oder drei Herbiziden kann wie folgt berechnet werden (vgl. COLBY, S.R.: "Calculating synergistic and antagonistic responses of herbicide combinations", Weeds 15, Seiten 20 - 22, 1967): Wenn

X = % Schädigung durch Herbizid (A) bei $\underline{m}$ g/ha Aufwandmenge,
Y = % Schädigung durch Herbizid (B) bei $\underline{n}$ g/ha Aufwandmenge,
Z = % Schädigung durch Herbizid (C) bei $\underline{r}$ kg/ha Aufwandmenge,
E1 = die erwartete Schädigung durch die Herbizide (A) und (B) bei Aufwandmengen von $\underline{m}$ und $\underline{n}$ kg/ha und,
E2 = die erwartete Schädigung durch die Herbizide (A) und (B) und (C) bei Aufwandmengen von $\underline{m}$ und $\underline{n}$ und $\underline{r}$ kg/ha bedeutet,

dann ist für eine Kombination

$$E1 = X + Y - \frac{X \times Y}{100}$$

und für eine Kombination aus 3 Wirkstoffen:

$$E2 = X + Y + Z - \frac{(X \times Y + X \times Z + Y \times Z)}{100} + \frac{X \times Y \times Z}{10000}$$

Ist die tatsächliche Schädigung größer als berechnet, so ist die Kombination in ihrer Wirkung überadditiv, d.h., sie zeigt einen synergistischen Effekt. In diesem Fall muss die tatsächlich beobachtete Schädigung größer sein als die aus den oben angeführten Formeln errechneten Werte für erwarteten Schädigungen E1 bzw. E2.

Die Erfindung wird durch die folgenden Beispiele veranschaulicht.

**Anwendungsbeispiele:**

Es werden folgende Formulierungen der involvierten Wirkstoffe benutzt:

- Pelargonsäure 186,7 EC (emulsifiable concentrate)
  Handelsformulierung Bayer Garten 3 Stunden Bio-Unkrautfrei zugelassen u.a. in Deutschland - Zulassungsinhaber W. Neudorff GmbH KG

- Foramsulfuron 50 WG (water dispersible granule) nicht adjuvantierte Standard-Granulatformulierung

- Iodosulfuron-methyl 10WG (water dispersible granule)
  (Handelsformulierung Destiny, zugelassen u.a. in Australien - Bayer CropScience)

- Mesosulfuron-methyl 75 WG (water dispersible granule) nicht adjuvantierte Standard-Granulatformulierung

- Thiencarbazone-methyl 70 WG (water dispersible granule) nicht adjuvantierte Standard-Granulatformulierung

- Amidosulfuron 75 WG (water dispersible granule)
  (Handelsformulierung Hoestar, zugelassen u.a. in Deutschland - Bayer CropScience)

- Ethoxysulfuron 60 WG (water dispersible granule)
  (Handelsformulierung SunRice, zugelassen u.a. in Italien - Bayer CropScience)

Die für die Versuche benötigten Wirkstoffkonzentrationen werden durch Verdünnen mit Wasser hergestellt. Die getesteten Wirkstoff-Kombinationen werden kurz vor deren biologischer Testung zusammengemischt.

Post-Emergence-Test

Mit der Wirkstoffzubereitung spritzt man Testpflanzen, welche eine Höhe von 5 bis 15 cm haben so, daß die jeweils gewünschten Wirkstoffmengen pro Flächeneinheit ausgebracht werden. Die Konzentration der Spritzbrühe wird so gewählt, dass in 1000 l Wasser/ha die jeweils gewünschten Wirkstoffmengen ausgebracht werden. Nach 48 Tagen wird der Schädigungsgrad der Pflanzen bonitiert in % Schädigung im Vergleich zur Entwicklung der unbehandelten Kontrolle. Bei allen erfindungsgemäßen Herbizid-Kombinationen werden bei der Mehrheit der Testpflanzen synergistische Wirkungen beobachtet (siehe Tabellen 1 bis 18).

Tabelle 1:

| Unkraut | Pelargonsäure 10000 g Wirkstoff/ha; Herbizide Wirkung [%] | Foramsulfuron 60 g Wirkstoff/ha; Herbizide Wirkung [%] | Herbizide Wirksamkeit [%] berechnet nach Colby | Getestete Herbizide Wirkung [%] |
|---|---|---|---|---|
| *Chenopodium* | 0 | 13,3 | 13 | 81,7 |
| *Festuca ovina* | 0 | 58,3 | 58 | 91,7 |
| *Plantago major* | 0 | 33,3 | 33 | 53,3 |
| *Taraxacum officinale* | 6,7 | 75 | 77 | 91,7 |
| *Poa annua* | 0 | 73,3 | 73 | 81,7 |
| *Trifolium repens* | 0 | 60 | 60 | 60 |

Tabelle 1: Erfindungsgemäße Herbizid-Kombination bestehend aus Pelargonsäure sowie Foramsulfuron.

Tabelle 2:

| Unkraut | Pelargonsäure 10000 g Wirkstoff/ha; Herbizide Wirkung [%] | Foramsulfuron 15 g Wirkstoff/ha; Herbizide Wirkung [%] | Herbizide Wirksamkeit [%] berechnet nach Colby | Getestete Herbizide Wirkung [%] |
|---|---|---|---|---|
| *Chenopodium* | 0 | 0 | 0 | 65 |
| *Festuca ovina* | 0 | 6,7 | 7 | 70 |
| *Plantago major* | 0 | 0 | 0 | 26,7 |
| *Taraxacum officinale* | 6,7 | 45 | 49 | 78,3 |
| *Poa annua* | 0 | 18,3 | 18 | 45 |
| *Trifolium repens* | 0 | 18,3 | 18 | 35 |

Tabelle 2: Erfindungsgemäße Herbizid-Kombination bestehend aus Pelargonsäure sowie Foramsulfuron

Tabelle 3:

| Unkraut | Pelargonsäure 30000 g Wirkstoff/ha; Herbizide Wirkung [%] | Foramsulfuron 60 g Wirkstoff/ha; Herbizide Wirkung [%] | Herbizide Wirksamkeit [%] berechnet nach Colby | Getestete Herbizide Wirkung [%] |
|---|---|---|---|---|
| Chenopodium | 20 | 13,3 | 31 | 83,3 |
| Festuca ovina | 6,7 | 58,3 | 61 | 98 |
| Plantago major | 13,3 | 33,3 | 42 | 60 |
| Taraxacum officinale | 20 | 75 | 80 | 98 |
| Poa annua | 0 | 73,3 | 73 | 90 |
| Trifolium repens | 3,3 | 60 | 61 | 65 |

Tabelle 3: Erfindungsgemäße Herbizid-Kombination bestehend aus Pelargonsäure sowie Foramsulfuron.

Tabelle 4:

| Unkraut | Pelargonsäure 30000 g Wirkstoff/ha; Herbizide Wirkung [%] | Foramsulfuron 15 g Wirkstoff/ha; Herbizide Wirkung [%] | Herbizide Wirksamkeit [%] berechnet nach Colby | Getestete Herbizide Wirkung [%] |
|---|---|---|---|---|
| Chenopodium | 20 | 0 | 20 | 68,3 |
| Festuca ovina | 6,7 | 6,7 | 13 | 81,7 |
| Plantago major | 13,3 | 0 | 13 | 35 |
| Taraxacum officinale | 20 | 45 | 56 | 89,3 |
| Poa annua | 0 | 18,3 | 18 | 31,7 |
| Trifolium repens | 3,3 | 18,3 | 21 | 33,3 |

Tabelle 4: Erfindungsgemäße Herbizid-Kombination bestehend aus Pelargonsäure sowie Foramsulfuron

Tabelle 5:

| Unkraut | Pelargonsäure 10000 g Wirkstoff/ha; Herbizide Wirkung [%] | Iodosulfuron-methyl 10 g Wirkstoff/ha; Herbizide Wirkung [%] | Herbizide Wirksamkeit [%] berechnet nach Colby | Getestete Herbizide Wirkung [%] |
|---|---|---|---|---|
| Chenopodium | 0 | 40 | 40 | 91 |
| Festuca ovina | 0 | 6,7 | 7 | 23,3 |
| Plantago major | 0 | 53,3 | 53 | 83,3 |
| Taraxacum officinale | 6,7 | 85 | 86 | 97 |
| Poa annua | 0 | 0 | 0 | 10 |

(fortgesetzt)

| Unkraut | Pelargonsäure 10000 g Wirkstoff/ha; Herbizide Wirkung [%] | Iodosulfuron-methyl 10 g Wirkstoff/ha; Herbizide Wirkung [%] | Herbizide Wirksamkeit [%] berechnet nach Colby | Getestete Herbizide Wirkung [%] |
|---|---|---|---|---|
| *Trifolium repens* | 0 | 80 | 80 | 90 |

Tabelle 5: Erfindungsgemäße Herbizid-Kombination bestehend aus Pelargonsäure sowie Iodosulfuron-methyl

Tabelle 6:

| Unkraut | Pelargonsäure 10000 g Wirkstoff/ha; Herbizide Wirkung [%] | Iodosulfuron-methyl 1 g Wirkstoff/ha; Herbizide Wirkung [%] | Herbizide Wirksamkeit [%] berechnet nach Colby | Getestete Herbizide Wirkung [%] |
|---|---|---|---|---|
| *Chenopodium* | 0 | 0 | 0 | 43,3 |
| *Festuca ovina* | 0 | 0 | 0 | 13,3 |
| *Plantago major* | 0 | 0 | 0 | 26,7 |
| *Taraxacum officinale* | 6,7 | 18,3 | 24 | 66,7 |
| *Poa annua* | 0 | 0 | 0 | 0 |
| *Trifolium repens* | 0 | 18,3 | 18 | 0 |

Tabelle 6: Erfindungsgemäße Herbizid-Kombination bestehend aus Pelargonsäure sowie Iodosulfuron-methyl

Tabelle 7:

| Unkraut | Pelargonsäure 30000 g Wirkstoff/ha; Herbizide Wirkung [%] | Iodosulfuron-methyl 10 g Wirkstoff/ha; Herbizide Wirkung [%] | Herbizide Wirksamkeit [%] berechnet nach Colby | Getestete Herbizide Wirkung [%] |
|---|---|---|---|---|
| *Chenopodium* | 20 | 40 | 52 | 91,3 |
| *Festuca ovina* | 6,7 | 6,7 | 13 | 68,3 |
| *Plantago major* | 13,3 | 53,3 | 60 | 86,7 |
| *Taraxacum officinale* | 20 | 85 | 88 | 98 |
| *Poa annua* | 0 | 0 | 0 | 28,3 |
| *Trifolium repens* | 3,3 | 80 | 81 | 94,3 |

Tabelle 7: Erfindungsgemäße Herbizid-Kombination bestehend aus Pelargonsäure sowie Iodosulfuron-methyl

Tabelle 8:

| Unkraut | Pelargonsäure 30000 g Wirkstoff/ha; Herbizide Wirkung [%] | Iodosulfuron-methyl 1 g Wirkstoff/ha; Herbizide Wirkung [%] | Herbizide Wirksamkeit [%] berechnet nach Colby | Getestete Herbizide Wirkung [%] |
|---|---|---|---|---|
| *Chenopodium* | 20 | 0 | 20 | 58,3 |
| *Festuca ovina* | 6,7 | 0 | 7 | 23,3 |
| *Plantago major* | 13,3 | 0 | 13 | 35 |
| *Taraxacum officinale* | 20 | 18,3 | 35 | 71,7 |
| *Poa annua* | 0 | 0 | 0 | 3,3 |
| *Trifolium repens* | 3,3 | 18,3 | 21 | 36,7 |

Tabelle 8: Erfindungsgemäße Herbizid-Kombination bestehend aus Pelargonsäure sowie Iodosulfuron-methyl

Tabelle 9:

| Unkraut | Pelargonsäure 10000 g Wirkstoff/ha; Herbizide Wirkung [%] | Foramsulfuron 60 g Wirkstoff/ha; Herbizide Wirkung [%] | Iodosulfuron-methyl 10 g Wirkstoff/ha; Herbizide Wirkung [%] | Herbizide Wirksam keit [%] berechnet nach Colby | Getestete Herbizide Wirkung [%] |
|---|---|---|---|---|---|
| *Chenopodium album* | 0 | 13,3 | 40 | 48 | 98,3 |
| *Festuca ovina* | 0 | 58,3 | 6,7 | 61 | 97 |
| *Plantago major* | 0 | 33,3 | 53,3 | 69 | 78,3 |
| *Taraxacum officinale* | 6,7 | 75 | 85 | 97 | 98 |
| *Poa annua* | 0 | 73,3 | 0 | 73 | 98,3 |
| *Trifolium repens* | 0 | 60 | 80 | 92 | 95 |

Tabelle 9: Erfindungsgemäße Herbizid-Kombination bestehend aus Pelargonsäure sowie Foramsulfuron und Iodosulfuron-methyl.

Tabelle 10:

| Unkraut | Pelargonsäure 10000 g Wirkstoff/ha; Herbizide Wirkung [%] | Foramsulfuron 15 g Wirkstoff/ha; Herbizide Wirkung [%] | Iodosulfuron-methyl 1 g Wirkstoff/ha; Herbizide Wirkung [%] | Herbizide Wirksam keit [%] berechnet nach Colby | Getestete Herbizide Wirkung [%] |
|---|---|---|---|---|---|
| *Chenopodium album* | 0 | 0 | 0 | 0 | 66,7 |
| *Festuca ovina* | 0 | 6,7 | 0 | 7 | 68,3 |
| *Plantago major* | 0 | 0 | 0 | 0 | 41,7 |

(fortgesetzt)

| Unkraut | Pelargonsäure 10000 g Wirkstoff/ha; Herbizide Wirkung [%] | Foramsulfuron 15 g Wirkstoff/ha; Herbizide Wirkung [%] | Iodosulfuron-methyl 1 g Wirkstoff/ha; Herbizide Wirkung [%] | Herbizide Wirksam keit [%] berechnet nach Colby | Getestete Herbizide Wirkung [%] |
|---|---|---|---|---|---|
| *Taraxacum officinale* | 6,7 | 45 | 18,3 | 58 | 85 |
| *Poa annua* | 0 | 18,3 | 0 | 18 | 56,7 |
| *Trifolium repens* | 0 | 18,3 | 18,3 | 33 | 53,3 |

Tabelle 10: Erfindungsgemäße Herbizid-Kombination bestehend aus Pelargonsäure sowie Foramsulfuron und Iodosulfuron-methyl.

Tabelle 11:

| Unkraut | Pelargonsäure 10000 g Wirkstoff/ha; Herbizide Wirkung [%] | Foramsulfuron 15 g Wirkstoff/ha; Herbizide Wirkung [%] | Iodosulfuron-methyl 10 g Wirkstoff/ha; Herbizide Wirkung [%] | Herbizide Wirksam keit [%] berechnet nach Colby | Getestete Herbizide Wirkung [%] |
|---|---|---|---|---|---|
| *Chenopodium album* | 0 | 0 | 40 | 40 | 95,7 |
| *Festuca ovina* | 0 | 6,7 | 6,7 | 13 | 85 |
| *Plantago major* | 0 | 0 | 53,3 | 53 | 81,7 |
| *Taraxacum officinale* | 6,7 | 45 | 85 | 92 | 98,7 |
| *Poa annua* | 0 | 18,3 | 0 | 18 | 78,3 |
| *Trifolium repens* | 0 | 18,3 | 80 | 84 | 95,3 |

Tabelle 11: Erfindungsgemäße Herbizid-Kombination bestehend aus Pelargonsäure sowie Foramsulfuron und Iodosulfuron-methyl.

Tabelle 12:

| Unkraut | Pelargonsäure 10000 g Wirkstoff/ha; Herbizide Wirkung [%] | Foramsulfuron 60 g Wirkstoff/ha; Herbizide Wirkung [%] | Iodosulfuron-methyl 1 g Wirkstoff/ha; Herbizide Wirkung [%] | Herbizide Wirksam keit [%] berechnet nach Colby | Getestete Herbizide Wirkung [%] |
|---|---|---|---|---|---|
| *Chenopodium album* | 0 | 13,3 | 0 | 13 | 78,3 |
| *Festuca ovina* | 0 | 58,3 | 0 | 58 | 90 |
| *Plantago major* | 0 | 33,3 | 0 | 33 | 56,7 |
| *Taraxacum officinale* | 6,7 | 75 | 18,3 | 81 | 95 |
| *Poa annua* | 0 | 73,3 | 0 | 73 | 92,3 |

(fortgesetzt)

| Unkraut | Pelargonsäure 10000 g Wirkstoff/ha; Herbizide Wirkung [%] | Foramsulfuron 60 g Wirkstoff/ha; Herbizide Wirkung [%] | Iodosulfuron-methyl 1 g Wirkstoff/ha; Herbizide Wirkung [%] | Herbizide Wirksam keit [%] berechnet nach Colby | Getestete Herbizide Wirkung [%] |
|---|---|---|---|---|---|
| *Trifolium repens* | 0 | 60 | 18,3 | 67 | 68,3 |

Tabelle 12: Erfindungsgemäße Herbizid-Kombination bestehend aus Pelargonsäure sowie Foramsulfuron und Iodosulfuron-methyl.

Tabelle 13:

| Unkraut | Pelargonsäure 20000 g Wirkstoff/ha; Herbizide Wirkung [%] | Foramsulfuron 45 g Wirkstoff/ha; Herbizide Wirkung [%] | Iodosulfuron-methyl 1,25 g Wirkstoff/ha; Herbizide Wirkung [%] | Herbizide Wirksam keit [%] berechnet nach Colby | Getestete Herbizide Wirkung [%] |
|---|---|---|---|---|---|
| *Chenopodium album* | 10 | 13 | 0 | 22 | 78 |
| *Festuca ovina* | 0 | 53 | 0 | 53 | 98 |
| *Plantago major* | 0 | 23 | 3 | 26 | 50 |
| *Taraxacum officinale* | 7 | 70 | 18 | 77 | 98 |
| *Poa annua* | 0 | 48 | 0 | 48 | 93 |
| *Trifolium repens* | 0 | 53 | 32 | 68 | 68 |

Tabelle 13: Erfindungsgemäße Herbizid-Kombination bestehend aus Pelargonsäure sowie Foramsulfuron und Iodosulfuron-methyl.

Tabelle 14:

| Unkraut | Pelargonsäure 20000 g Wirkstoff/ha; Herbizide Wirkung [%] | Foramsulfuron 60 g Wirkstoff/ha; Herbizide Wirkung [%] | Iodosulfuron-methyl 2,5 g Wirkstoff/ha; Herbizide Wirkung [%] | Herbizide Wirksam keit [%] berechnet nach Colby | Getestete Herbizide Wirkung [%] |
|---|---|---|---|---|---|
| *Chenopodium album* | 10 | 13 | 10 | 30 | 89 |
| *Festuca ovina* | 0 | 58 | 0 | 58 | 98 |
| *Plantago major* | 0 | 33 | 30 | 53 | 55 |
| *Taraxacum officinale* | 7 | 75 | 42 | 86 | 97 |
| *Poa annua* | 0 | 73 | 0 | 73 | 93 |
| *Trifolium repens* | 0 | 60 | 45 | 78 | 78 |

Tabelle 14: Erfindungsgemäße Herbizid-Kombination bestehend aus Pelargonsäure sowie Foramsulfuron und Iodosulfuron-methyl.

Tabelle 15:

| Unkraut | Pelargonsäure 30000 g Wirkstoff/ha; Herbizide Wirkung [%] | Foramsulfuron 60 g Wirkstoff/ha; Herbizide Wirkung [%] | Iodosulfuron-methyl 10 g Wirkstoff/ha; Herbizide Wirkung [%] | Herbizide Wirksam keit [%] berechnet nach Colby | Getestete Herbizide Wirkung [%] |
|---|---|---|---|---|---|
| *Chenopodium album* | 20 | 13,3 | 40 | 58 | 97,7 |
| *Festuca ovina* | 6,7 | 58,3 | 6,7 | 64 | 97,7 |
| *Plantago major* | 13,3 | 33,3 | 53,3 | 73 | 88,3 |
| *Taraxacum officinale* | 20 | 75 | 85 | 97 | 98 |
| *Poa annua* | 0 | 73,3 | 0 | 73 | 85 |
| *Trifolium repens* | 3,3 | 60 | 80 | 92 | 92,3 |

Tabelle 15: Erfindungsgemäße Herbizid-Kombination bestehend aus Pelargonsäure sowie Foramsulfuron und Iodosulfuron-methyl.

Tabelle 16:

| Unkraut | Pelargonsäure 30000 g Wirkstoff/ha; Herbizide Wirkung [%] | Foramsulfuron 15 g Wirkstoff/ha; Herbizide Wirkung [%] | Iodosulfuron-methyl 1 g Wirkstoff/ha; Herbizide Wirkung [%] | Herbizide Wirksam keit [%] berechnet nach Colby | Getestete Herbizide Wirkung [%] |
|---|---|---|---|---|---|
| *Chenopodium album* | 20 | 0 | 0 | 20 | 83,3 |
| *Festuca ovina* | 6,7 | 6,7 | 0 | 13 | 78,3 |
| *Plantago major* | 13,3 | 0 | 0 | 13 | 41,7 |
| *Taraxacum officinale* | 20 | 45 | 18,3 | 64 | 96 |
| *Poa annua* | 0 | 18,3 | 0 | 18 | 38,3 |
| *Trifolium repens* | 3,3 | 18,3 | 18,3 | 35 | 53,3 |

Tabelle 16: Erfindungsgemäße Herbizid-Kombination bestehend aus Pelargonsäure sowie Foramsulfuron und Iodosulfuron-methyl.

Tabelle 17:

| Unkraut | Pelargonsäure 30000 g Wirkstoff/ha; Herbizide Wirkung [%] | Foramsulfuron 15 g Wirkstoff/ha; Herbizide Wirkung [%] | Iodosulfuron-methyl 10 g Wirkstoff/ha; Herbizide Wirkung [%] | Herbizide Wirksam keit [%] berechnet nach Colby | Getestete Herbizide Wirkung [%] |
|---|---|---|---|---|---|
| *Chenopodium album* | 20 | 0 | 40 | 52 | 93,3 |
| *Festuca ovina* | 6,7 | 6,7 | 6,7 | 19 | 91,7 |
| *Plantago major* | 13,3 | 0 | 53,3 | 60 | 75 |
| *Taraxacum officinale* | 20 | 45 | 85 | 93 | 98,7 |
| *Poa annua* | 0 | 18,3 | 0 | 18 | 73,3 |
| *Trifolium repens* | 3,3 | 18,3 | 80 | 84 | 93,3 |

Tabelle 17: Erfindungsgemäße Herbizid-Kombination bestehend aus Pelargonsäure sowie Foramsulfuron und Iodosulfuron-methyl.

Tabelle 18:

| Unkraut | Pelargonsäure 30000 g Wirkstoff/ha; Herbizide Wirkung [%] | Foramsulfuron 60 g Wirkstoff/ha; Herbizide Wirkung [%] | Iodosulfuron-methyl 1 g Wirkstoff/ha; Herbizide Wirkung [%] | Herbizide Wirksam keit [%] berechnet nach Colby | Getestete Herbizide Wirkung [%] |
|---|---|---|---|---|---|
| *Chenopodium album* | 20 | 13,3 | 0 | 31 | 88,3 |
| *Festuca ovina* | 6,7 | 58,3 | 0 | 61 | 98,3 |
| *Plantago major* | 13,3 | 33,3 | 0 | 42 | 63,3 |
| *Taraxacum officinale* | 20 | 75 | 18,3 | 84 | 98,7 |
| *Poa annua* | 0 | 73,3 | 0 | 73 | 92,3 |
| *Trifolium repens* | 3,3 | 60 | 18,3 | 68 | 75 |

Tabelle 18: Erfindungsgemäße Herbizid-Kombination bestehend aus Pelargonsäure sowie Foramsulfuron und Iodosulfuron-methyl.

**Patentansprüche**

1.  Herbizid-Kombination enthaltend
    als Komponente (A) Pelargonsäure,
    und
    als Komponente (B) zumindest einen ALS-Inhibitor ausgewählt aus der Gruppe von Iodosulfuron-methyl, Foramsulfuron, Mesosulfuron-methyl, Amidosulfuron, Ethoxysulfuron und Thiencarbazone-methyl.

2.  Herbizid-Kombination nach Anspruch 1, wobei das Gewichtsverhältnis der Komponenten (A) und (B) im Bereich von 30000:1 bis 12,5:1 liegt.

3. Herbizid-Kombination nach Anspruch 2, wobei als Komponente (B) Foramsulfuron verwendet wird und das Gewichtsverhältnis zwischen der Komponente (A) und (B) dann in einem Bereich von 2000:1 bis 167:1 liegt, oder als Komponente (B) Iodosulfuron-methyl verwendet wird und das Gewichtsverhältnis zwischen der Komponente (A) und (B) dann in einem Bereich von 30000:1 bis 1000:1 liegt, oder als Komponente (B) Mesosulfuron-methyl verwendet wird und das Gewichtsverhältnis zwischen der Komponente (A) und (B) dann in einem Bereich von 4000:1 bis 333:1 liegt, oder als Komponente (B) Thiencarbazone-methyl verwendet wird und das Gewichtsverhältnis zwischen der Komponente (A) und (B) dann in einem Bereich von 3000:1 bis 333:1 liegt, oder als Komponente (B) Amidosulfuron verwendet wird und das Gewichtsverhältnis zwischen der Komponente (A) und (B) dann in einem Bereich von 1000:1 bis 167:1 liegt, oder als Komponente (B) Ethoxysulfuron verwendet wird und das Gewichtsverhältnis zwischen der Komponente (A) und (B) dann in einem Bereich von 500:1 bis 50:1 liegt.

4. Herbizid-Kombination nach einem der vorherigen Ansprüche, wobei neben der Komponente (A) als Komponente (B) zumindest zwei unterschiedliche ALS-Inhibitoren verwendet werden.

5. Herbizid-Kombination nach Anspruch 4, wobei die ALS-Inhibitoren ausgewählt sind aus der Gruppe von Iodosulfuron-methyl und Foramsulfuron.

6. Herbizid-Kombination nach Anspruch 5, wobei die Herbizid-Kombination neben der Komponente (A) Iodosulfuron-methyl und Foramsulfuron enthält.

7. Herbizid-Kombination nach Anspruch 6, wobei auf einen Gewichtsteil an Iodosulfuron-methyl 15-60 Gewichtsteile Foramsulfuron und 2500 - 30000 Gewichtsteile Pelargonsäure entfallen.

8. Herbizid-Kombination nach einem der vorherigen Ansprüche, enthaltend einen wirksamen Gehalt an Komponenten (A) und (B) und/oder zusätzlich eine oder mehrere weitere Komponenten aus der Gruppe agrochemischer Wirkstoffe anderer Art, im Pflanzenschutz übliche Zusatzstoffe und Formulierungshilfsmittel.

9. Verfahren zur Bekämpfung von Unkräutern, **dadurch gekennzeichnet, dass** man Herbizid-Kombinationen gemäß einem der Ansprüche 1 bis 8 auf die Unkräuter und/oder deren Lebensraum ausbringt.

10. Verfahren zu Bekämpfung von Unkräutern gemäß Anspruch 9, **dadurch gekennzeichnet, dass** man die Komponente (A) und die Komponente (B) der Herbizid-Kombination erst kurz vor Ausbringung auf die Unkräuter und/oder deren Lebensraum zusammenmischt.

11. Verwendung von Herbizid-Kombinationen gemäß einem der Ansprüche 1 bis 8 zur Bekämpfung von Unkräutern.

**Claims**

1. Herbicide combination comprising
   as component (A) pelargonic acid
   and
   as component (B) at least one ALS inhibitor selected from the group consisting of iodosulfuron-methyl, foramsulfuron, mesosulfuron-methyl, amidosulfuron, ethoxysulfuron and thiencarbazone-methyl.

2. Herbicide combination according to Claim 1 where the weight ratio of components (A) and (B) is in the range from 30000:1 to 12.5:1.

3. Herbicide combination according to Claim 2 where the component (B) used is foramsulfuron and the weight ratio of components (A) and (B) is in a range of from 2000:1 to 167:1 or the component (B) used is iodosulfuron-methyl and the weight ratio of components (A) and (B) is in a range of from 30000:1 to 1000:1 or the component (B) used is mesosulfuron-methyl and the weight ratio of components (A) and (B) is in a range of from 4000:1 to 333:1 or

the component (B) used is thiencarbazone-methyl and the weight ratio of components (A) and (B) is in a range of from 3000:1 to 333:1 or

the component (B) used is amidosulfuron and the weight ratio of components (A) and (B) is in a range of from 1000:1 to 167:1 or

the component (B) used is ethoxysulfuron and the weight ratio of components (A) and (B) is in a range of from 500:1 to 50:1.

4. Herbicide combination according to any of the preceding claims where, in addition to component (A), at least two different ALS inhibitors are used as component (B).

5. Herbicide combination according to Claim 4 where the ALS inhibitors are selected from the group consisting of iodosulfuron-methyl and foramsulfuron.

6. Herbicide combination according to Claim 5 where the herbicide combination comprises iodosulfuron-methyl and foramsulfuron in addition to component (A).

7. Herbicide combination according to Claim 6 where 15-60 parts by weight of foramsulfuron and 2500 - 30000 parts by weight of pelargonic acid are present per part by weight of iodosulfuron-methyl.

8. Herbicide combination according to any of the preceding claims, comprising an effective amount of components (A) and (B) and/or additionally one or more further components from the group of agrochemically active compounds of a different type, formulation auxiliaries and additives customary in crop protection.

9. Method for controlling weeds, **characterized in that** herbicide combinations according to any of Claims 1 to 8 are applied to the weeds and/or their habitat.

10. Method for controlling weeds according to Claim 9 **characterized in that** component (A) and component (B) of the herbicide combination are mixed only shortly before application to the weeds and/or their habitat.

11. Use of herbicide combinations according to one of Claims 1 to 8 for controlling weeds.


**Revendications**

1. Combinaison herbicide, contenant
en tant que composant (A), de l'acide pélargonique
et
en tant que composant (B), au moins un inhibiteur d'ALS choisi dans le groupe constitué par l'iodosulfuron-méthyl, le foramsulfuron, le mésosulfuron-méthyl, l'amidosulfuron, l'éthoxysulfuron et le thiéncarbazone-méthyl.

2. Combinaison herbicide selon la revendication 1, dans laquelle le rapport en poids entre les composants (A) et (B) se situe dans la plage allant de 30 000:1 à 12,5:1.

3. Combinaison herbicide selon la revendication 2, dans laquelle le foramsulfuron est utilisé en tant que composant (B) et le rapport en poids entre les composants (A) et (B) se situe alors dans une plage allant de 2 000:1 à 167:1, ou l'iodosulfuron-méthyl est utilisé en tant que composant (B) et le rapport en poids entre les composants (A) et (B) se situe alors dans une plage allant de 30 000:1 à 1 000:1, ou le mésosulfuron-méthyl est utilisé en tant que composant (B) et le rapport en poids entre les composants (A) et (B) se situe alors dans une plage allant de 4 000:1 à 333:1, ou le thiéncarbazone-méthyl est utilisé en tant que composant (B) et le rapport en poids entre les composants (A) et (B) se situe alors dans une plage allant de 3 000:1 à 333:1, ou l'amidosulfuron est utilisé en tant que composant (B) et le rapport en poids entre les composants (A) et (B) se situe alors dans une plage allant de 1 000:1 à 167:1, ou l'éthoxysulfuron est utilisé en tant que composant (B) et le rapport en poids entre les composants (A) et (B) se situe alors dans une plage allant de 500:1 à 50:1.

4. Combinaison herbicide selon l'une quelconque des revendications précédentes, dans laquelle, en plus du composant (A), au moins deux inhibiteurs d'ALS différents sont utilisés en tant que composant (B).

**5.** Combinaison herbicide selon la revendication 4, dans laquelle les inhibiteurs d'ALS sont choisis dans le groupe constitué par l'iodosulfuron-méthyl et le foramsulfuron.

**6.** Combinaison herbicide selon la revendication 5, dans laquelle la combinaison herbicide contient en plus du composant (A) de l'iodosulfuron-méthyl et du foramsulfuron.

**7.** Combinaison herbicide selon la revendication 6, dans laquelle, pour une partie en poids d'iodosulfuron-méthyl, 15 à 60 parties en poids de foramsulfuron et 2 500 à 30 000 parties en poids d'acide pélargonique sont utilisées.

**8.** Combinaison herbicide selon l'une quelconque des revendications précédentes, contenant une teneur efficace en composants (A) et (B) et/ou en outre un ou plusieurs composants supplémentaires du groupe constitué par les agents actifs agrochimiques d'un autre type, les additifs usuels dans la protection des plantes et les adjuvants de formulation.

**9.** Procédé de lutte contre des mauvaises herbes, **caractérisé en ce que** des combinaisons herbicides selon l'une quelconque des revendications 1 à 8 sont appliquées sur les mauvaises herbes et/ou leur habitat.

**10.** Procédé de lutte contre des mauvaises herbes selon la revendication 9, **caractérisé en ce que** le composant (A) et le composant (B) de la combinaison herbicide ne sont mélangés que peu de temps avant l'application sur les mauvaises herbes et/ou leur habitat.

**11.** Utilisation de combinaisons herbicides selon l'une quelconque des revendications 1 à 8 pour lutter contre des mauvaises herbes.

**IN DER BESCHREIBUNG AUFGEFÜHRTE DOKUMENTE**

**In der Beschreibung aufgeführte Patentdokumente**

- WO 9105472 A

- EP 0494386 A1

**In der Beschreibung aufgeführte Nicht-Patentliteratur**

- The Pesticide Manual. British Crop Protection Council, 2011

- **COLBY, S.R.** Calculating synergistic and antagonistic responses of herbicide combinations. *Weeds,* 1967, vol. 15, 20-22